# EUROPÄISCHE PATENTSCHRIFT

(11) **EP 2 791 634 B1**
(45) Veröffentlichungstag und Bekanntmachung des Hinweises auf die Patenterteilung: **06.04.2016**
(21) Anmeldenummer: 12787371.9
(22) Anmeldetag: 03.11.2012
(51) Int. Cl.: G01G 21/28

(54) **LAGERUNG FÜR EINE SEITENSCHEIBE EINER WAAGE, BAUGRUPPE FÜR EINEN WINDSCHUTZ EINER WAAGE SOWIE VERFAHREN ZUR DEMONTAGE EINER SEITENSCHEIBE EINER SOLCHEN BAUGRUPPE**
MOUNTING FOR A SIDE PANEL OF A WEIGHING MACHINE, ASSEMBLY FOR A WINDSHIELD OF A WEIGHING MACHINE, AND METHOD FOR REMOVING A SIDE PANEL OF SUCH AN ASSEMBLY
SUPPORT POUR UNE PLAQUE LATÉRALE DE BALANCE, GROUPE STRUCTURAL POUR UN PARE-VENT DE BALANCE ET PROCÉDÉ DE DÉMONTAGE D'UNE PLAQUE LATÉRALE D'UN TEL GROUPE STRUCTURAL

(30) Priorität: 14.12.2011 DE 102011056400
(43) Veröffentlichungstag der Anmeldung: 22.10.2014
(73) Patentinhaber: Sartorius Lab Instruments GmbH & Co. KG, 37075 Göttingen (DE)
(72) Erfinder: KUHLMANN, Otto, 37085 Göttingen (DE)
(86) Internationale Anmeldenummer: PCT/EP2012/004588
(87) Internationale Veröffentlichungsnummer: WO 2013/087133

(56) Entgegenhaltungen:
- DE-A1-102008 008 486
- GB-A- 2 217 584

## Beschreibung

Die Erfindung betrifft die Lagerung für eine Seitenscheibe einer Waage, mit zwei einander gegenüberliegenden, im Wesentlichen parallel zueinander verlaufenden Schienen, zwischen denen eine Seitenscheibe so geführt ist, dass sie zwischen einer geschlossenen Stellung und einer geöffneten Stellung verschoben werden kann. Die Erfindung betrifft des Weiteren eine Baugruppe für einen Windschutz einer Waage sowie ein Verfahren zur Demontage einer Seitenscheibe aus einer solchen Baugruppe.

Es ist allgemein bekannt, an einer Präzisionswaage einen Windschutz anzubringen, der einen Raum oberhalb der Waagschale der Waage umgibt. Beispiele für einen solchen Windschutz finden sich in der DE 94 07 984 U, der EP 1 195 585 A1 sowie der DE10 2008 008 486 A1. Hinsichtlich ihrer Grundfunktion, also der Verhinderung einer Beeinflussung des Wiegevorgangs durch Luftbewegungen, durch elektrostatische Anziehungskräfte oder auch Wärmestrahlung, sind die aus dem Stand der Technik bekannten Ausführungsformen eines Windschutzes zufriedenstellend. Um einen zu wiegenden Gegenstand auf die Waagschale legen zu können, weist ein solcher Windschutz eine Seitenscheibe auf, die zwischen einer geschlossenen Stellung und einer geöffneten Stellung verschoben werden kann. Um den Windschutz zu reinigen oder um einen ungehinderten Zugang zur Waagschale zu erhalten, ist es wünschenswert, diese Seitenscheibe vollständig demontieren zu können. Andererseits muss die Seitenscheibe in der Lagerung sicher geführt und gehalten sein, um ein unbeabsichtigtes Herausschieben der Seitenscheibe, beispielsweise bei einem zu schnellen Verschieben in die geöffnete Stellung, zu verhindern.

Aufgabe der Erfindung ist es, eine Lagerung für eine Seitenscheibe bereitzustellen, die eine einfache Demontage der Seitenscheibe ermöglicht, aber eine sichere Führung ermöglicht und ein unbeabsichtigtes Herausfallen der Seitenscheibe verhindert. Des Weiteren ist es Aufgabe der Erfindung, ein Verfahren zur Demontage einer solchen Seitenscheibe bereitzustellen.

Zur Lösung der Aufgabe ist bei einer Lagerung nach Anspruch 1 vorgesehen, dass die zweite Schiene in einem ersten, vorderen Abschnitt im Wesentlichen parallel zur ersten Schiene verläuft und sich in einem zweiten, hinteren Abschnitt von der ersten Schiene weg erstreckt, so dass die zweite, gegenüberliegende Schiene der ersten Schiene in einem solche Abstand gegenüberliegt, dass die Scheibe, wenn sie sich in der geöffneten Stellung befindet, durch Anheben des Randes der Scheibe, der beim Öffnen hinten liegt, über den Anschlag hinwegbewegt werden kann, jedoch der entgegengesetzte, vordere Rand der Scheibe nicht oder nur unwesentlich angehoben werden kann. Bei einem zu schnellen Aufschieben der Seitenscheibe würde diese gegen den Anschlag stoßen und anschließend um diesen herum nach hinten kippen, wobei sich der vordere Rand der Seitenscheibe anheben würde. Dies ist durch die Form der zweiten Schiene zuverlässig verhindert, die in dieser Position kein oder nur ein unwesentliches Anheben des vorderen Randes erlaubt. Einerseits ist die zweite Schiene so ausgebildet, dass der hintere Rand angehoben und die Seitenscheibe über den Anschlag hinwegbewegt werden kann. Zur Demontage der Seitenscheibe muss diese also aktiv angehoben werden, wobei aber keine zusätzlichen Sicherungselemente gelöst werden müssen. Die Seitenscheibe kann auf einfache Weise ohne Werkzeug demontiert werden. Andererseits ist die Scheibe zuverlässig vor einem versehentlichen herausschieben aus der Schiene geschützt. Durch die zusätzliche Halteleiste kann die Scheibe wesentlich reibungsärmer gelagert werden. Zudem können Vorsprünge, die mit dem Anschlag zusammenwirken können, um die geöffnete Stellung zu definieren, einfacher an einer solchen Halteleiste ausgebildet werden. Die Halteleisten bilden des Weiteren einen Schutz für die Kanten der Seitenscheibe. Durch die Position des Anschlags bzw. des Vorsprungs werden die geöffnete Stellung bzw. die Öffnungsmöglichkeiten der Seitenscheibe definiert.

Vorzugsweise ist an der Seitentür zusätzlich ein Schließmechanismus vorgesehen, der die Seitentür in der geschlossenen Stellung fixiert beziehungsweise in diese Stellung bewegt. Ein unbeabsichtigtes Öffnen oder ein nicht vollständiges Schließen der Seitentür ist so sicher ausgeschlossen, sodass unabhängig von äußeren Einflüssen ein genauer Wiegevorgang möglich ist.

Der Schließmechanismus kann mechanischer Potentialänderung beruhen, also darauf, dass die Seitenscheibe durch die Schwerkraft in die geschlossene Position abgesenkt wird. Dies ermöglicht ein selbsttätiges Schließen der Seitenscheibe ohne zusätzliche Bauteile.

Der Schließmechanismus weist in einer solchen Ausführungsform mindestens einen schräg verlaufenden Abschnitt an einer der Schienen, insbesondere an der unten liegenden Schiene auf. Die Seitenscheibe wird entlang dieser Schiene nach vorne unten bewegt, sodass die Seitenscheibe aufgrund der Schwerkraft automatisch nach vorne in die geschlossene Position bewegt wird.

Der schräg verlaufende Abschnitt kann beispielsweise in Schließrichtung am vorderen und/oder am hinteren Ende der Schiene liegen.

Die Schiene kann beispielsweise einen Totpunkt aufweisen, über den die Seitenscheibe hinwegbewegt werden muss, bevor der Schließmechanismus auf die Seitenscheibe wirken kann. Der Schließmechanismus wirkt in dieser Ausführungsform nicht konstant auf die Seitentür, sondern erst nach Überwinden des Totpunktes, so dass die Seitenscheibe auch in einer geöffneten Stellung gehalten werden kann. Der Totpunkt kann beispielsweise dadurch gebildet sein, dass die Schiene zwei in entgegengesetzte Richtungen abfallende Abschnitte aufweist, die zwischen sich den Totpunkt bilden. Die abfallenden Abschnitte können so ausgebildet sein, dass der vordere und der hintere Rand der Seitenscheibe in der geschlossenen und/oder der geöffneten Position auf gleicher Höhe liegen, also die Seitenscheibe waagrecht ausgerichtet ist.

Die zweite Schiene erstreckt sich vorzugsweise von einem dem Anschlag gegenüberliegenden Punkt in Öffnungsrichtung von der ersten Schiene weg. Dadurch hat die zweite Schiene im hinteren Bereich, insbesondere im Bereich des Anschlags einen größeren Abstand zur ersten Schiene, so dass die Seitenscheibe mit ihrem hinteren Rand angehoben werden kann, während die zweite Schiene in einem vorderen Abschnitt so verläuft, dass der vordere Rand der Seitenscheibe nicht angehoben werden kann. Da die Seitenscheibe um den Anschlag beziehungsweise um den am Anschlag anliegenden Vorsprung gekippt werden kann, muss sichergestellt sein, dass die vordere, obere Ecke der Seitenscheibe an der zweiten Schiene anschlägt. Da sich diese beim Kippen der Seitenscheibe im Wesentlichen auf einer Kreisbahn um den Anschlag beziehungsweise um den Vorsprung bewegt, muss der zweite Abschnitt, um ein Kippen der Seitenscheibe zuverlässig zu verhindern, innerhalb einer Kreisbahn angeordnet sein, deren Mittelpunkt der Anschlag beziehungsweise der Vorsprung ist und deren Radius dem Abstand vom Mittelpunkt zur vorderen, oberen Ecke der Seitenscheibe entspricht.

Vorzugsweise sind die erste und/oder die zweite Schiene durch eine Nut gebildet. Dies ermöglicht eine sichere seitliche Führung der Seitenscheibe, auch in einem Bereich, in dem sich die zweite Schiene von der ersten Schiene weg erstreckt. Die Nuten müssen lediglich ausreichend tief ausgebildet sein, dass die Seitenscheibe auch beim Anheben der Seitenscheibe weiterhin seitlich in den Nuten geführt ist.

Der Anschlag an der ersten Schiene kann beispielsweise durch eine Verengung der Nut gebildet sein. Dies hat gegenüber einem gewöhnlichen, horizontalen Absatz den Vorteil, dass der Grund der Schiene eben verläuft und keine horizontalen Stufen aufweist. Dadurch ist die Reinigung der Schiene wesentlich vereinfacht, da keine Stufen vorhanden sind, an denen sich Schmutz ansammeln kann.

Um die Reinigung weiter zu vereinfachen, sind die Schienen in Verschieberichtung offen, sodass Verschmutzungen aus der Schiene einfach entfernt werden können.

Der Vorsprung liegt vorzugsweise in Schließrichtung hinter der Schwerpunktachse der Scheibe. Dies verhindert, dass die Seitenscheibe in der Position, in der sie am Anschlag ansteht, um ihre Schwerpunktachse nach hinten verkippt. Auch wenn die Seitenscheibe durch die Form der zweiten Schiene nicht aus der Lagerung heraus kippen kann, könnte durch ein Kippen der Seitenscheibe nach hinten der vordere Rand der Seitenscheibe an der zweiten Schiene anschlagen, was zu einer Beschädigung der Seitenscheibe oder zum Verklemmen der Seitenscheibe in der Lagerung führen könnte. Da der Vorsprung hinter der Schwerpunktachse liegt, ist dies zuverlässig verhindert.

Die in der ersten Schiene geführte Halteleiste weist vorzugsweise drei Auflagepunkte auf, wobei ein erster Auflagepunkt am in Schließrichtung vorderen Ende der Halteleiste, ein zweiter Auflagepunkt am in Schließrichtung hinteren Ende der Halteleiste und ein dritter Auflagepunkt im Bereich des Vorsprungs vorgesehen ist, wobei der dritte Auflagepunkt insbesondere in Schließrichtung vor dem Vorsprung vorgesehen ist. Üblicherweise ist die Seitenscheibe bzw. die Halteleiste auf dem ersten und dem zweiten Auflagepunkt gelagert. Der dritte, mittlere Auflagepunkt dient als zusätzliche Lagerung, wenn der zweite Auflagepunkt beim Öffnen der Seitenscheibe nach hinten aus der Schiene herausgeschoben wird. Dadurch ist in jeder Stellung der Seitenscheibe eine Lagerung an mindestens zwei Auflagepunkten sichergestellt, so dass ein Kippen der Seitenscheibe sicher verhindert ist.

Der erste, der zweite und/oder der dritte Auflagepunkt können beispielsweise durch eine Rolle gebildet sein, wodurch die Seitenscheibe sehr reibungsarm gelagert ist.

Es ist aber auch denkbar, dass die Auflagepunkte durch eine Gleitkufe gebildet sind, sodass keine drehbaren Teile, die einen erhöhten Wartungsaufwand erforderlich machen, vorhanden sind.

Der dritte Auflagepunkt ist gegenüber dem ersten und dem zweiten Auflagepunkt von der ersten Schiene höhenversetzt an der Halteleiste angeordnet. Das heißt, die Halteleiste ist üblicherweise auf dem ersten und dem zweiten Auflagepunkt gelagert. Der dritte, mittlere Auflagepunkt dient lediglich der zusätzlichen Lagerung beim Öffnen der Seitenscheibe.

Zum Öffnen und Schließen der Seitenscheibe kann am vorderen Rand der Halteleiste ein Handgriff vorgesehen sein.

Erfindungsgemäß ist des Weiteren eine Baugruppe für einen Windschutz einer Waage vorgesehen, mit einer erfindungsgemäßen Lagerung und mit einer Seitenscheibe, die in den Schienen zwischen einer geschlossenen Stellung und einer geöffneten Stellung verschiebbar gelagert ist.

Des Weiteren ist erfindungsgemäß ein Verfahren zur Demontage einer Seitenscheibe aus einer solchen Baugruppe vorgesehen, das folgende Schritte aufweist:
- Verschieben der Seitenscheibe entgegen der Schließrichtung, bis der der Seitenscheibe zugeordnete Vorsprung am Anschlag der ersten Schiene anliegt,
- Anheben des hinteren Randes der Seitenscheibe, bis der Vorsprung nicht mehr am Anschlag anliegt, wobei die Seitenscheibe um den vorderen Auflagepunkt geschwenkt wird,
- Verschieben der Seitenscheibe entgegen der Schließrichtung, bis diese vollständig aus der Lagerung herausgeschoben ist.

Weitere Vorteile und Merkmale ergeben sich aus der nachfolgenden Beschreibung in Verbindung mit den beigefügten Zeichnungen. In diesen zeigen:
- Figur 1 eine Waage mit einer erfindungsgemäßen Baugruppe für einen Windschutz,
- Figur 2 den Windschutz der Waage aus Figur 1,
- Figur 3 eine Schnittansicht durch den Windschutz aus Figur 2,
- Figur 4 eine Seitenansicht einer erfindungsgemäßen Baugruppe für einen Windschutz,
- Figuren 5a bis 5h verschiedene Verfahrensschritte zur Demontage der Seitenscheibe der Baugruppe aus Figur 4,
- Figur 6 eine zweite Ausführungsform einer erfindungsgemäßen Baugruppe, und
- Figuren 7a bis 7c verschiedene Verfahrensschritte zur Demontage der Seitenscheibe der Baugruppe aus Figur 6.

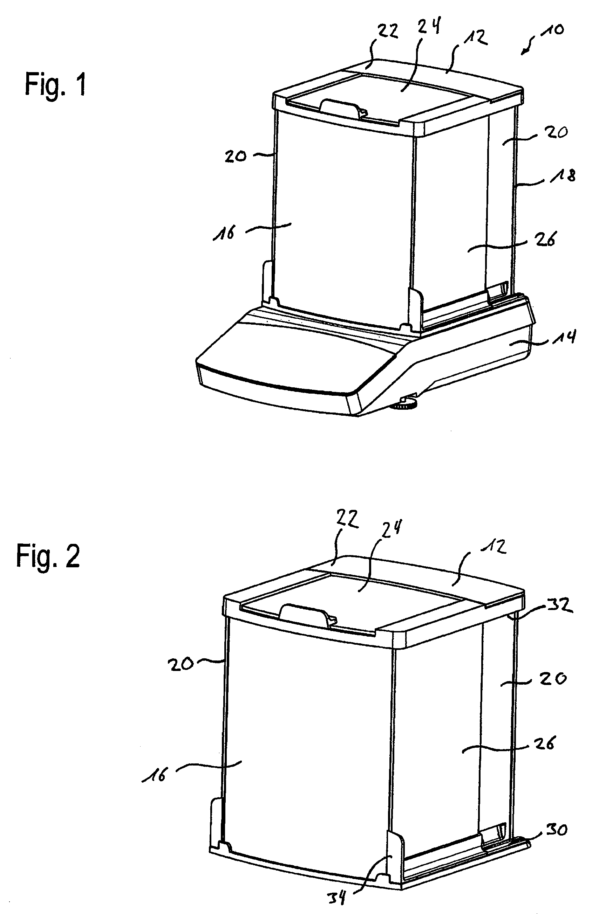

In Figur 1 ist eine Präzisionswaage 10 mit einer Wiegeeinrichtung 14 und einem Windschutz 12 gezeigt. Der Windschutz 12 dient dazu, einen Raum oberhalb der Wiegeeinrichtung 14 zu umgeben und so die Waagschale der Wiegeeinrichtung 14 vor äußeren Einflüssen, beispielsweise Luftbewegungen, elektrostatischen Anziehungskräften oder auch Wärmestrahlung zu schützen, um eine genaue Messung zu gewährleisten.

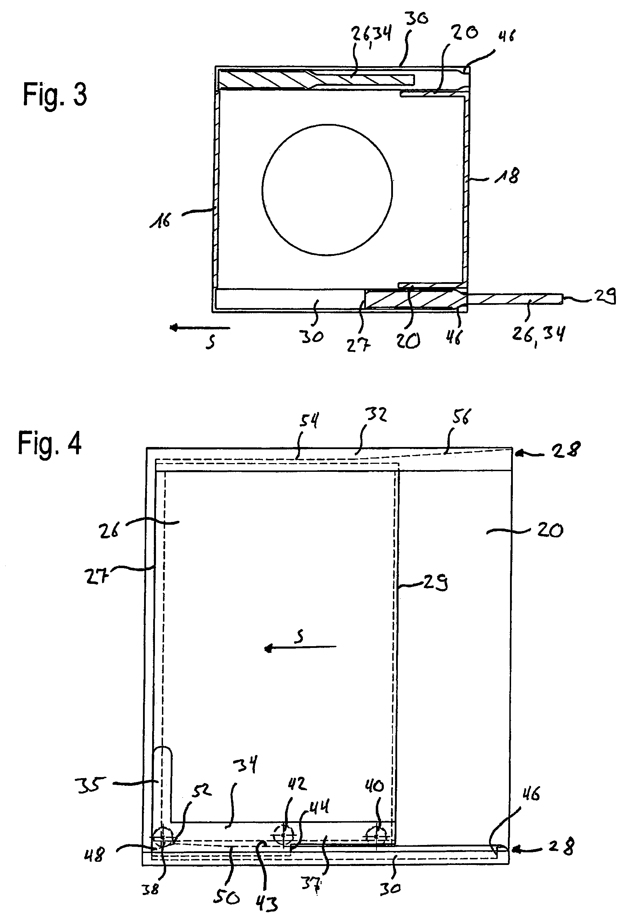

Der Windschutz 12 weist eine Vorderseite 16, eine Rückseite 18, zwei Seitenwände 20 sowie einen Deckel 22 auf. Nach unten hin, zur Wiegeeinrichtung 14, ist der Windschutz 12 offen ausgebildet, kann aber eine Bodenplatte oder einen Rahmen aufweisen, an dem die Vorderseite 16, die Rückseite 18 und die Seitenwände 20 gehalten beziehungsweise gelagert sind. Um einen zu wiegenden Gegenstand in den Windschutz 12 und auf die Waagschale legen zu können, ist zum einen am Deckel 22 ein Deckschieber 24 vorgesehen. Zum anderen weisen die Seitenwände 20 jeweils eine verschiebbare Seitenscheibe 26 auf (siehe auch Figur 3).

Wie in Figur 4 zu sehen ist, ist an jeder Seitenwand 20 eine Lagerung 28 für die Seitenscheibe 26 vorgesehen, die eine erste Schiene 30 und eine zweite Schiene 32 aufweist. Die Lagerung 28 weist des Weiteren Halteleisten auf, an denen die Seitenscheibe befestigt und reibungsarm in den Schienen gelagert ist. In der hier gezeigten Ausführungsform ist lediglich die der ersten Schiene 30 zugeordnete Halteleiste 34 detailliert dargestellt. Auch der zweiten Schiene 32 kann eine Halteleiste zugeordnet sein. Aus Gründen der Übersicht, ist diese in den Figuren nicht dargestellt.

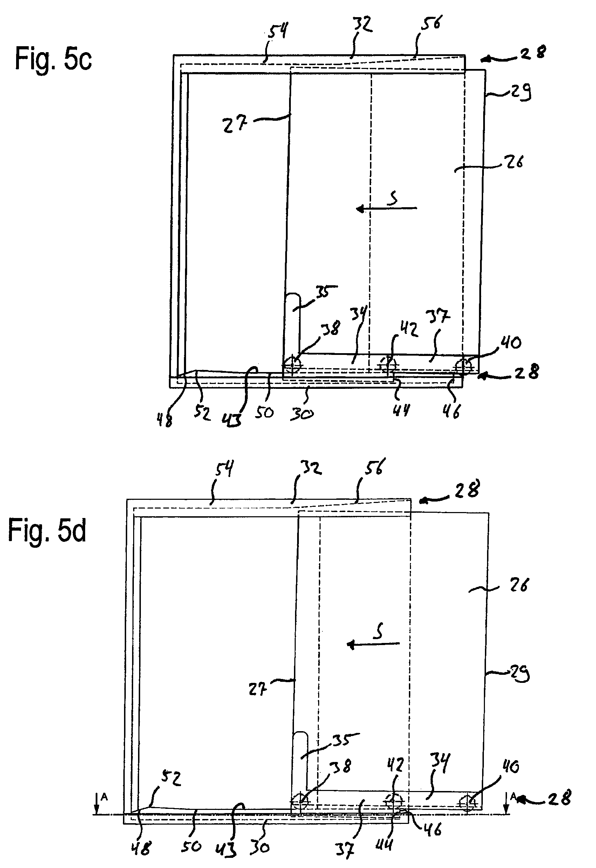

Die Schienen 30, 32 sind einander gegenüberliegend angeordnet und verlaufen im Wesentlichen parallel zueinander und in einer im Wesentlichen parallel zur Seitenwand 20 angeordnete Ebene. Die Seitenscheibe 26 ist in der Lagerung 28 zwischen einer in Figur 4 gezeigten geschlossenen Stellung und einer geöffneten Stellung (Figur 5d), in der ein Teil der Seitenwand 20 freigegeben wird, verschiebbar.

Die erste Schiene 30 weist an ihrem hinteren Ende einen Anschlag 46 auf sowie zwei schräg verlaufende Abschnitte 48, 50 auf, wobei zwischen diesen Abschnitten 48, 50 ein Totpunkt 52 gebildet ist. Der erste schräg verlaufende Abschnitt 48 fällt zum vorderen Ende der ersten Schiene 30 hin ab und der zweite schräg verlaufende Abschnitt 50 zum hinteren Ende der ersten Schiene, wobei das Gefälle des ersten schräg verlaufenden Abschnitts 48 wesentlich steiler ist als das Gefälle des zweiten schräg verlaufenden Abschnitts 50. Der erste schräg verlaufende Abschnitt 48 hat ein Gefälle zwischen 10° bis 20°. Das Gefälle des zweiten schräg verlaufenden Abschnitts 50 beträgt > 0° bis maximal 5°.

Die zweite Schiene 32 verläuft in einem ersten, vorderen Abschnitt 54 im Wesentlichen parallel zur ersten Schiene 30. In einem zweiten, hinteren Abschnitt 56 erstreckt sich die zweite Schiene 32 von der ersten Schiene 30 weg.

Die Halteleiste 34 ist im Wesentlichen L-förmig ausgebildet und weist an einem ersten Schenkel 35 einen Handgriff 36 auf, der dazu dient, die Seitenscheibe 26 zwischen der geschlossenen Stellung und der offenen Stellung zu verschieben. Am zweiten Schenkel 37 der Halteleiste 34 sind drei Auflagepunkte 38, 40, 42 vorgesehen, über die die Halteleiste 34 in der ersten Schiene 30 gelagert ist. Die Auflagepunkte 38, 40, 42 weisen hier jeweils eine Rolle auf, die drehbar an der Halteleiste 34 gelagert ist. Es ist aber auch denkbar, dass diese beispielsweise durch Gleitkufen gebildet sind.

Der erste Auflagepunkt 38 liegt am vorderen Rand der Seitenscheibe 26, der zweite Auflagepunkt 40 befindet sich am hinteren Rand der Seitenscheibe. Der dritte Auflagepunkt 42 ist zwischen diesen Auflagepunkten 38, 40 angeordnet und, wie in Figur 4 zu sehen ist, gegenüber dem ersten und dem zweiten Auflagepunkt 38, 40 bezüglich der ersten Schiene 30 zurückversetzt, so dass dieser in der geschlossenen Position nicht auf dem Grund 43 der ersten Schiene 30 aufliegt. Des Weiteren ist der dritte Auflagepunkt 42 hinter der Schwerpunktachse der Seitenscheibe 26 beziehungsweise der Baugruppe aus Seitenscheibe 26 und Halteleiste 34 angeordnet. An der Halteleiste 34 ist zudem ein Vorsprung 44 gebildet, der, wie im Folgenden dargestellt wird, mit einem Anschlag 46, der am hinteren Ende der ersten Schiene 30 gebildet ist, zusammenwirken kann und die vollständig geöffnete Stellung der Seitenscheibe 26 definiert.

Im regulären Betrieb, also wenn die Seitenscheibe 26 zwischen der geschlossenen und der geöffneten Stellung verschoben wird, ist die Seitenscheibe 26 nur mit dem ersten Auflagepunkt 38 und dem zweiten Auflagepunkt 40 in der ersten Schiene 30 gelagert.

Der erste schräge Abschnitt 48 dient hier als Schließmechanismus. Befinden sich die Auflagepunkte 38, 40, 42 auf einer der schräg verlaufenden Abschnitte 48, 50 wirkt auf diese jeweils eine senkrecht zum schräg verlaufenden Abschnitt 48, 50 wirkende Normalkraft sowie eine parallel zu diesem Abschnitten 48, 50 wirkende Hangabtriebskraft.

Wird die Seitenscheibe 26 von der geöffneten Stellung in die geschlossene Stellung bewegt, wirkt auf den ersten Auflagepunkt 38, sobald dieser über den Totpunkt 52 hinwegbewegt ist, aufgrund des steileren Gefälles des ersten schräg verlaufenden Abschnitts eine Hangabtriebskraft, die den ersten Auflagepunkt 38 nach vorne und somit die Seitenscheibe 26 in die geschlossene Stellung bewegt. Das Gefälle des ersten schräg verlaufenden Abschnitts ist dafür so gewählt, dass die auf den ersten Auflagepunkt 38 wirkende Hangabtriebskraft größer ist als die Reibungskraft aller Auflagepunkte 38, 40, 42 sowie die auf dem zweiten und den dritten Auflagepunkt 40, 42 wirkenden Hangabtriebskräfte, so dass die Seitenscheibe durch die resultierende Kraft auf die Seitenscheibe 26 nach vorne in die geschlossene Position bewegt wird.

Die nach Verschieben des ersten Auflagepunktes 38 über den Totpunkt 52 auf den zweiten Abschnitt 50 auf die Auflagepunkte 38, 40, 42 und somit auf die Seitenscheibe 26 wirkende Hangabtriebskraft ist aufgrund des geringen Gefälles des zweiten schräg verlaufenden Abschnitts 50 deutlich geringer. Je nach Gefälle und Art der der Auflagepunkte 38, 40, 42 kann diese ausreichend groß sein, um die Seitenscheibe 26 in die geöffnete Position zu bewegen. Es ist aber auch denkbar, dass das Gefälle so gewählt ist, dass dadurch lediglich die zum Verschieben der Seitenscheibe 26 in die geöffnete Stellung zusätzlich benötigte Kraft reduziert wird, und somit die Seitenscheibe 26 mit einem geringen Kraftaufwand bewegt werden kann.

Der zweite schräg verlaufende Abschnitt 50 dient hier also zum einen dazu, nach Überwinden des Totpunkts 52 das Öffnen der Seitenscheibe 26, also dem Verschieben in die geöffnete Stellung, zu unterstützen. Zudem dient diese dazu, dass ein Höhenausgleich zum ersten schräg verlaufenden Abschnitt 48 erfolgt, sodass die Seitenscheibe 26 in der geschlossenen Stellung im Wesentlichen waagrecht ausgerichtet ist. Dies wird dadurch erreicht, dass das Gefälle des ersten und des zweiten schräg verlaufenden Abschnitts 48, 50 so gewählt wird, dass der erste und der zweite Auflagepunkt 38, 40 in der geschlossenen Stellung im Wesentlichen auf einer Höhe liegen.

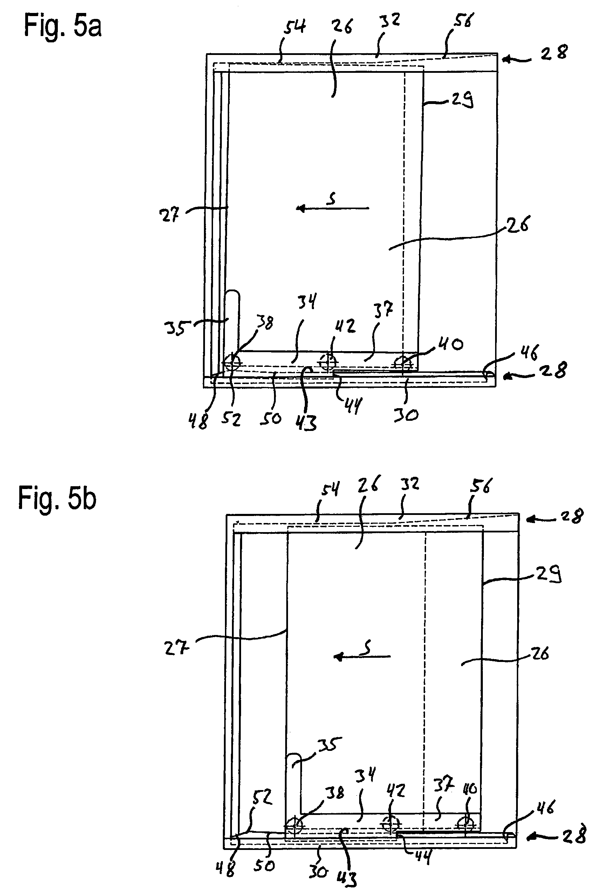

Das Bewegen der Seitenscheibe 26 in die geöffnete Stellung sowie die Demontage der Seitenscheibe 26 ist in den Figuren 5a bis 5h dargestellt.

In Figur 4 ist die Seitenscheibe in vollständig geschlossener Stellung gezeigt. Zu Öffnen der Seitenscheibe 26 wird diese entgegen einer Schließrichtung S verschoben, bis der erste Auflagepunkt 38 über den Totpunkt 52 hinwegbewegt ist (Figur 5a). Bis zum Erreichen des Totpunktes 52 wird die Seitenscheibe 26 durch den ersten schräg verlaufenden Abschnitt 48 in die geschlossene Stellung gedrängt. Nach dem Überfahren des Totpunktes 52 wird die Seitenscheibe 26 entgegen der Schließrichtung S weiter verschoben, bis der Vorsprung 44 am Anschlag 46 anschlägt (Figuren 5b bis 5d).

Nachdem der zweite Auflagepunkt 40 nach hinten aus der ersten Schiene 30 herausgeschoben ist (Figur 5c), liegt die Scheibe auf dem ersten Auflagepunkt 38 und dem dritten, mittleren Auflagepunkt 42 auf, wobei die Seitenscheibe, da der dritte Auflagepunkt 42 versetzt angeordnet ist, leicht nach hinten gekippt wird. Das hintere Ende der ersten Schiene 30 ist abgerundet, so dass ein sanftes Absenken des zweiten Auflagepunktes 40 erfolgt. Zudem dient das abgerundete Ende beim Bewegen der Seitenscheibe 26 in die geschlossene Position als Auflaufschräge für den zweiten Auflagepunkt 40, der aus der ersten Schiene 30 herausgeschoben ist.

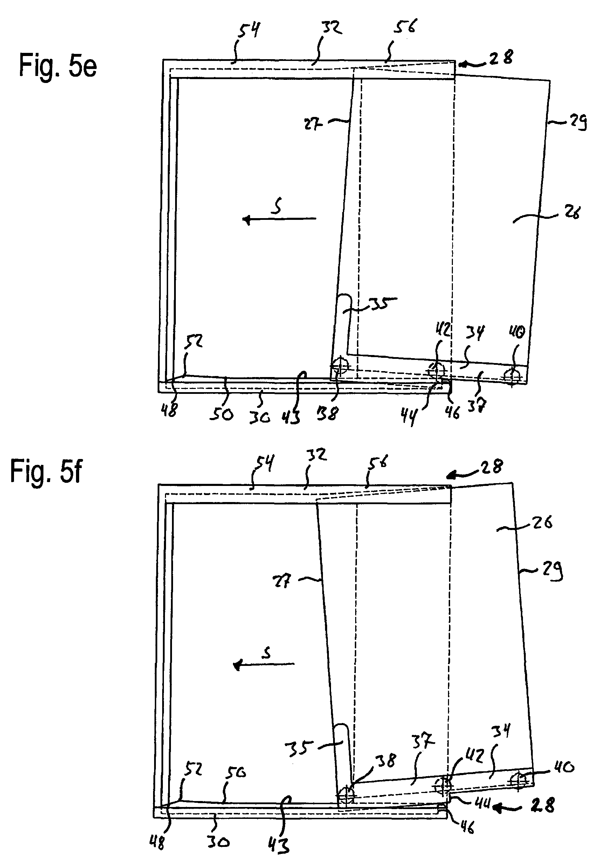

Wie in Figur 5e zu sehen ist, kann in dieser geöffneten Stellung der vordere Rand 27 der Seitenscheibe 26 nur soweit angehoben werden, bis der vordere Rand 27 an der zweiten Schiene 32 anschlagt. Ein versehentliches Herausschieben der Seitenscheibe 26 bzw. ein Herausfallen, falls die Seitenscheibe 26 mit einer großen Geschwindigkeit gegen den Anschlag 46 geschoben wird und infolgedessen um den Anschlag 46 verkippt wird, ist somit nicht möglich.

Während des Verschiebens in die geöffnete Stellung wird der zweite Auflagepunkt 40 aus der ersten Schiene 30 herausgeschoben. Wie in den Figuren 5c und 5d zu erkennen ist, liegt die Seitenscheibe anschließend auf dem ersten und dem dritten Auflagepunkt 38, 42 auf. Ein Verkippen der Seitenscheibe 26 um den dritten, mittleren Auflagepunkt 42 ist aber zuverlässig verhindert, da dieser in Schließrichtung S hinter der Schwerpunktachse der Seitenscheibe 26 angeordnet ist. Auch der Vorsprung 44 ist in Schließrichtung S hinter der Schwerpunktachse der Seitenscheibe 26 angeordnet, um ein Verkippen der Seitenscheibe 26 zu verhindern, wenn der Vorsprung 44 am Anschlag 46 anliegt.

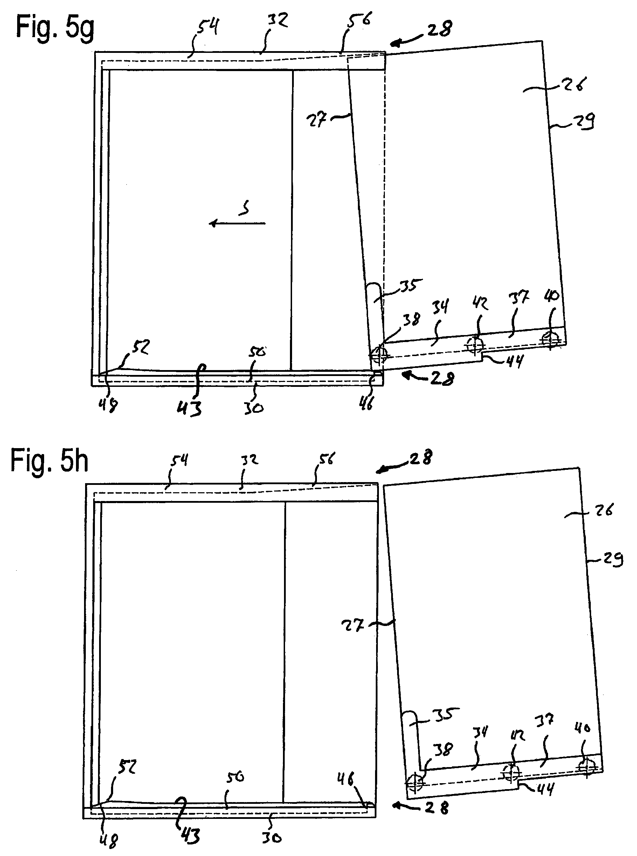

Zur Entnahme der Seitenscheibe 26 muss der hintere Rand 29 der Seitenscheibe 26 angehoben werden, bis der Vorsprung 44 nicht mehr am Anschlag 46 anliegt. Wie in Figur 5f zu sehen ist, ist der zweite, hintere Abschnitt 56 der zweiten Schiene 32, da dieser sich von der ersten Schiene 30 weg erstreckt, so ausgebildet, dass ein Anheben des hinteren Randes 29 möglich ist, ohne dass die Seitenscheibe 26 an der zweiten Schiene 32 anschlägt. Anschließend kann die Seitenscheibe entgegen der Schließrichtung S aus der Lagerung 28 herausgeschoben werden (Figuren 5g und 5h). Dabei ist die Seitenscheibe 26 mit dem ersten Auflagepunkte 38 in der Schiene 30 gelagert, sodass ein einfaches, reibungsarmes Verschieben der Seitenscheibe 26 möglich ist.

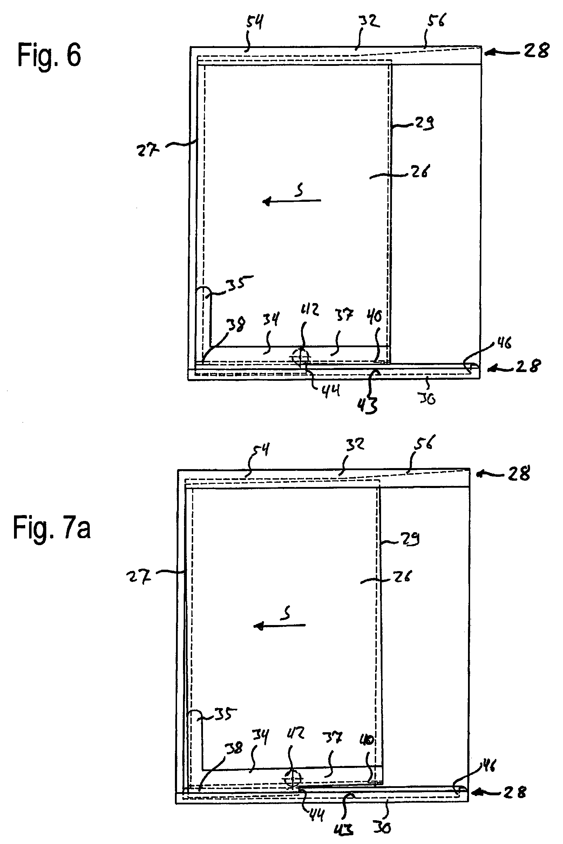

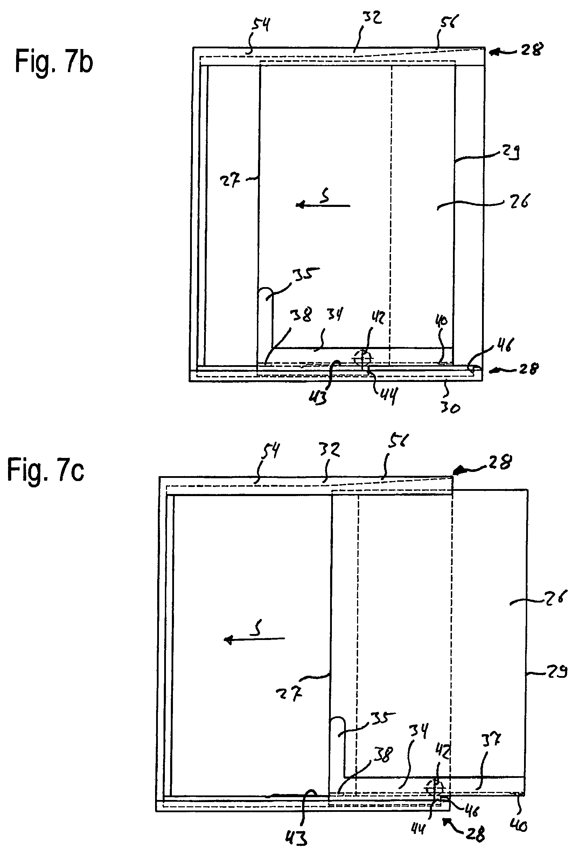

Eine zweite Ausführungsform einer erfindungsgemäßen Baugruppe ist in Figur 6 gezeigt. Der Aufbau dieser Baugruppe stimmt im Wesentlichen mit der in Figur 4 gezeigten Baugruppe überein. Der erste und der zweite Auflagepunkt 38, 40 der Halteleiste 34 sind hier aber durch Gleitlager gebildet, während der dritte Auflagepunkt 42 weiterhin durch eine Rolle gebildet ist. Des Weiteren weist die erste Schiene 30 keine schrägen Abschnitte auf, sondern ist im Wesentlichen waagrecht ausgebildet. Auch die Seitenscheibe 26 dieser Baugruppe kann, wie in den Figuren 7a bis 7c dargestellt ist, auf die gleiche Weise wie in der in Figur 4 gezeigten Ausführungsform aus der Lagerung 28 entnommen werden.

Wie in Figur 3 zu sehen ist, sind die Schienen 30, 32 jeweils durch eine Nut gebildet, die nach hinten offen ausgebildet ist. Dies hat den Vorteil, dass Schmutz, der sich in der Schiene 30, 32 anlagert, auf einfache Weise aus der jeweiligen Schiene 30 ,32 herausgeschoben werden kann. Der Anschlag 46 ist zudem durch eine Verengung gebildet, während der Vorsprung 44 an der Halteleiste 34 durch eine Erweiterung gebildet ist. Dadurch weist der Grund 43 der Schiene 30, 32 keine Stufen auf, an denen sich Schmutz anlagern könnte.

Der zweite Abschnitt 56 der zweiten Schiene 32 ist, wie insbesondere in Figur 5f zu sehen ist, so ausgebildet, dass bei der Entnahme der Seitenscheibe 26 der obere Rand der Seitenscheibe 26 bzw. die obere Halteleiste im Wesentlichen parallel zu diesem Abschnitt 56 verläuft. Der Abschnitt 56 könnte aber auch auf andere Weise gekrümmt sein. Die obere, zweite Schiene 32 muss lediglich so ausgebildet sein, dass ein Verkippen um den Anschlag 46 bzw. ein Anheben des vorderen Randes 27 der Seitenscheibe 26 verhindert ist, während ein Anheben des hinteren Randes 29 bzw. ein Verkippen um den ersten Auflagepunkt 38 in der geöffneten Stellung möglich ist. Da die Seitenscheibe 26 um den Anschlag 46 beziehungsweise um den Vorsprung 44 gekippt wird, muss sichergestellt sein, dass die vordere, obere Ecke der Seitenscheibe 26 an der zweiten Schiene 32 anschlägt. Da sich diese beim Kippen der Seitenscheibe im Wesentlichen auf einer Kreisbahn um den Anschlag 46 beziehungsweise um den Vorsprung 44 bewegt, muss der zweite Abschnitt 56 innerhalb einer Kreisbahn um den Anschlag 46 beziehungsweise um den Vorsprung 44 angeordnet sein, um ein Kippen der Seitenscheibe 26 zuverlässig zu verhindern.

### Bezugszeichenliste

- 10: Waage
- 12: Windschutz
- 14: Wiegeeinrichtung
- 16: Vorderseite
- 18: Rückseite
- 20: Seitenwände
- 22: Deckel
- 24: Deckschieber
- 26: Seitenscheibe
- 27: Rand
- 28: Lagerung
- 29: Rand
- 30: erste Schiene
- 32: zweite Schiene
- 34: Halteleiste
- 35: erster Schenkel
- 36: Handgriff
- 37: zweiter Schenkel
- 38: erster Auflagepunkt
- 40: zweiter Auflagepunkt
- 42: dritter Auflagepunkt
- 43: Grund
- 44: Vorsprung
- 46: Anschlag
- 48: erster schräg verlaufender Abschnitt
- 50: zweiter schräg verlaufender Abschnitt
- 52: Totpunkt
- 54: erster Abschnitt
- 56: zweiter Abschnitt

## Patentansprüche

1. Lagerung (28) für eine Seitenscheibe (26) einer Waage (10), mit zwei einander gegenüberliegenden, im Wesentlichen parallel zueinander verlaufenden Schienen (30, 32), zwischen denen die Seitenscheibe (26) so geführt ist, dass sie zwischen einer geschlossenen Stellung und einer geöffneten Stellung verschoben werden kann, wobei in jeder Schiene (30, 32) eine Halteleiste (34) vorgesehen ist, die in der Schiene (30, 32) in Schließrichtung (S) verschiebbar gelagert ist und wobei die Seitenscheibe (26) an den Halteleisten (34) montiert werden kann, wobei an einer ersten Schiene (30) ein Anschlag (46) und ein Vorsprung (44) an der in der ersten Schiene (30) gelagerten Halteleiste (34) vorgesehen sind, wobei der Anschlag (46) so mit der Seitenscheibe (26) bzw. dem Vorsprung (44) zusammenwirken kann, dass die vollständig geöffnete Stellung definiert ist, **dadurch gekennzeichnet, dass** die zweite Schiene (32) in einem ersten, vorderen Abschnitt (54) im Wesentlichen parallel zur ersten Schiene (30) verläuft und sich in einem zweiten, hinteren Abschnitt (56) von der ersten Schiene (30) weg erstreckt, so dass die zweite, gegenüberliegende Schiene (32) der ersten Schiene (30) in einem solchen Abstand gegenüberliegt, dass die Seitenscheibe (26), wenn sie sich in der geöffneten Stellung befindet, durch Anheben des Randes (29) der Seitenscheibe (26), der beim Öffnen der Seitenscheibe (26) hinten liegt, über den Anschlag (46) hinwegbewegt werden kann, jedoch der entgegengesetzte, vordere Rand (27) der Seitenscheibe (26) nicht oder nur unwesentlich angehoben werden kann.

2. Lagerung nach Anspruch 1, **dadurch gekennzeichnet, dass** ein Schließmechanismus vorgesehen ist, der die Seitenscheibe (26) in der geschlossenen Stellung fixiert.

3. Lagerung nach Anspruch 2, **dadurch gekennzeichnet, dass** der Schließmechanismus auf mechanischer Potentialänderung beruht.

4. Lagerung nach Anspruch 3, **dadurch gekennzeichnet, dass** der Schließmechanismus mindestens einen schräg verlaufenden Abschnitt (48, 50) an einer der Schienen (30, 32), insbesondere an der unten liegenden Schiene (30), umfasst.

5. Lagerung nach Anspruch 4, **dadurch gekennzeichnet, dass** der schräg verlaufende Abschnitt (48) in Schließrichtung (S) am vorderen Ende der Schiene (30) liegt.

6. Lagerung nach Anspruch 5, **dadurch gekennzeichnet, dass** auch am hinteren Ende der Schiene (30) ein schräg verlaufender Abschnitt vorgesehen ist.

7. Lagerung nach Anspruch 5 oder Anspruch 6, **dadurch gekennzeichnet, dass** die Schiene (30) einen Totpunkt (52) umfasst.

8. Lagerung nach einem der vorhergehenden Ansprüche, **dadurch gekennzeichnet, dass** sich die zweite Schiene (32) von einem dem Anschlag (46) gegenüberliegenden Punkt entgegen der Schließrichtung (S) von der ersten Schiene (30) weg erstreckt, innerhalb eines Kreisbogens, dessen Mittelpunkt der Anschlag oder ein Vorsprung ist und dessen Radius dem Abstand vom Mittelpunkt zur vorderen, oberen Ecke der Seitenscheibe entspricht.

9. Lagerung nach einem der vorhergehenden Ansprüche, **dadurch gekennzeichnet, dass** die erste und/oder die zweite Schiene (30, 32) durch eine Nut gebildet ist.

10. Lagerung nach Anspruch 9, **dadurch gekennzeichnet, dass** der Anschlag (46) durch eine Verengung der Nut gebildet ist.

11. Lagerung nach einem der vorhergehenden Ansprüche, **dadurch gekennzeichnet, dass** die Schienen (30, 32) entgegen der Schließrichtung offen ausgebildet sind.

12. Lagerung nach einem der vorhergehenden Ansprüche, **dadurch gekennzeichnet, dass** der Vorsprung (44) in Schließrichtung (S) hinter der Schwerpunktachse der Seitenscheibe (26) angeordnet ist.

13. Lagerung nach einem der vorhergehenden Ansprüche, **dadurch gekennzeichnet, dass** die in der ersten Schiene (30) geführte Halteleiste (34) drei Auflagepunkte (38, 40, 42) aufweist, wobei ein erster Auflagepunkt (38) am in Schließrichtung (S) vorderen Ende der Halteleiste (34), ein zweiter Auflagepunkt (40) am in Schließrichtung (S) hinteren Ende der Halteleiste (34) und ein dritter Auflagepunkt (42) im Bereich des Vorsprungs (44) vorgesehen ist, wobei der dritte Auflagepunkt (42) in Schließrichtung (S) hinter dem Vorsprung (44) vorgesehen ist.

14. Lagerung nach Anspruch 13, **dadurch gekennzeichnet, dass** der erste, der zweite und/oder der dritte Auflagepunkt (38, 40, 42) durch eine Rolle gebildet ist.

15. Lagerung nach Anspruch 13, **dadurch gekennzeichnet, dass** der erste, der zweite und/oder der dritte Auflagepunkt (38, 40, 42) durch eine Gleitkufe gebildet ist.

16. Lagerung nach einem der Ansprüche 13 bis 15, **dadurch gekennzeichnet, dass** der dritte Auflagepunkt (42) gegenüber dem ersten und dem zweiten Auflagepunkt (38, 40) in Richtung zur ersten Schiene (30) zurückversetzt an der Halteleiste (34) angeordnet ist.

17. Lagerung nach einem der vorhergehenden Ansprüche, **dadurch gekennzeichnet, dass** am vorderen Ende der Halteleiste (34) ein Handgriff (36) vorgesehen ist.

18. Baugruppe für einen Windschutz (12) einer Waage (10) mit einer Lagerung (28) nach einem der vorhergehenden Ansprüche und mit einer Seitenscheibe (26), die in den Schienen (30, 32) in einer Schließrichtung (S) verschiebbar gelagert ist.

19. Verfahren zur Demontage einer Seitenscheibe (26) aus einer Baugruppe nach Anspruch 18 mit folgenden Schritten:
- Verschieben der Seitenscheibe (26) entgegen der Schließrichtung (S), bis der der Seitenscheibe (26) zugeordnete Vorsprung (44) am Anschlag (46) der ersten Schiene (30) anliegt,
- Anheben des in Schließrichtung (S) hinteren Randes (29) der Seitenscheibe (26), bis der Vorsprung (44) nicht mehr am Anschlag (46) anliegt, wobei die Seitenscheibe (26) um einen vorderen Auflagepunkt (38) geschwenkt wird,
- Verschieben der Seitenscheibe (26) entgegen der Schließrichtung (S), bis diese vollständig aus der Lagerung (28) herausgeschoben ist.

## Claims

1. Mounting (28) for a side panel (26) of a weighing machine (10), with two mutually opposite rails (30, 32), which extend substantially parallel to one another and between which the side panel (26) is so guided that it can be displaced between a closed setting and an open setting, wherein provided in each rail (30, 32) is a mounting strip (34) which is mounted in the rail (30, 32) to be displaceable in closing direction (S) and wherein the side panel (26) can be mounted at the mounting strips (34), wherein an abutment (46) is provided at a first rail (30) and a projection (44) is provided at the mounting strip (34) mounted in the first rail (30), wherein the abutment (46) is so co-operable with the side panel (26) or the projection (44) that the fully opened setting is defined, **characterised in that** the second rail (32) extends in a first, front section (54) substantially parallel to the first rail (30) and extends in a second, rear section (56) away from the first rail (30), so that the second, opposite rail (32) is opposite the first rail (30) at such a spacing that the side panel (26) when in the open setting can be moved away over the abutment (46) by lifting that edge (29) of the side panel (46) which trails during opening of the side panel (26), but the opposite, front edge (27) of the side panel 926) cannot be lifted or can be lifted only insubstantially.

2. Mounting according to claim 1, **characterised in that** a closing mechanism fixing the side panel (26) in the closed setting is provided.

3. Mounting according to claim 2, **characterised in that** the closing mechanism is based on mechanical change in potential.

4. Mounting according to claim 3, **characterised in that** the closing mechanism comprises at least one obliquely extending section (48, 50) at one of the rails (30, 32), particularly at the rail (30) disposed at the bottom.

5. Mounting according to claim 4, **characterised in that** the obliquely extending section (48) lies at the front end of the rail (30) in the closing direction (S).

6. Mounting according to claim 5, **characterised in that** an obliquely extending section is also provided at the rear end of the rail (30).

7. Mounting according to claim 5 or claim 6, **characterised in that** the rail (30) has a dead centre (52).

8. Mounting according to any one of the preceding claims, **characterised in that** the second rail (32) extends from a point, which is opposite the abutment (26), against the closing direction (S) away from the first rail (30) within an arc, the centre point of which is the abutment or a projection and the radius of which corresponds with the spacing from the centre point to the front, upper corner of the side panel.

9. Mounting according to any one of the preceding claims, **characterised in that** the first and/or second rail (30, 32) is formed by a groove.

10. Mounting according to claim 9, **characterised in that** the abutment (46) is formed by a narrowing of the groove.

11. Mounting according to any one of the preceding claims, **characterised in that** the rails (30, 32) are formed to be open against the closing direction.

12. Mounting according to any one of the preceding claims, **characterised in that** the projection (44) is arranged behind the centre-of-gravity axis of the side panel (26) behind the projection (44) in closing direction (S).

13. Mounting according to any one of the preceding claims, **characterised in that** the mounting strip (34) guided in the first rail (30) has three support points (38, 40, 42), wherein a first support point (38) is provided at the end of the mounting strip (34) at the front in the closing direction (S), a second support point (40) is provided at the end of the mounting strip (34) at the rear in the closing direction (S) and a third support point (42) is provided in the region of the projection (44), wherein the third support point (42) is provided behind the projection (44) in the closing direction (S).

14. Mounting according to claim 13, **characterised in that** the first, second and/or third support point (38, 40, 42) is formed by a roller.

15. Mounting according to claim 13, **characterised in that** the first, second and/or third support point (38, 40, 42) is formed by a skid.

16. Mounting according to any one of claims 13 to 15, **characterised in that** the third support point (42) is arranged at the mounting strip (34) to be set back relative to the first and second support points (38, 40) in direction towards the first rail (30).

17. Mounting according to any one of the preceding claims, **characterised in that** a handle (36) is provided at the front end of the mounting strip (34).

18. Sub-assembly for a wind protecting means (12) of a weighing machine (10) with a mounting (28) according to any one of the preceding claims and with a side panel (26) which is mounted in the rails (30, 32) to be displaceable in a closing direction (S).

19. Method of demounting a side panel (26) from a sub-assembly according to claim 18, comprising the following steps:
- displacing the side panel (26) against the closing direction (S) until the projection (44) associated with the side panel (26) bears against the abutment (46) of the first rail (30),
- lifting the edge (29), which is rearward in the closing direction (S), of the side panel (26) until the projection (44) no longer bears against the abutment (46), wherein the side panel (26) is pivoted about a front support point (38), and
- displacing the side panel (26) against the closing direction (S) until this is pushed completely out of the mount (28).

## Revendications

1. Support (28) pour une plaque latérale (26) d'une balance (10), comprenant deux rails (30, 32) se faisant face l'un l'autre, s'étendant essentiellement de manière parallèle l'un par rapport à l'autre, entre lesquels la plaque latérale (26) est guidée de telle sorte qu'elle peut être coulissée entre une position fermée et une position ouverte, sachant qu'une baguette de maintien (34) est prévue dans chaque rail (30, 32), laquelle est logée dans le rail (30, 32) de manière à pouvoir être coulissée dans la direction de fermeture (S) et sachant que la plaque latérale (26) peut être montée au niveau des baguettes de maintien (34), sachant qu'une butée (46) et une partie faisant saillie (44) au niveau de la baguette de maintien (34) logée dans le premier rail (30) sont prévues au niveau d'un premier rail (30), sachant que la butée (46) peut coopérer avec la plaque latérale (26) ou la partie faisant saillie (44) de telle sorte que la position totalement ouverte est définie, **caractérisé en ce que** le deuxième rail (32) s'étend dans un premier segment (54) avant essentiellement de manière parallèle par rapport au premier rail (30) et s'étend de manière à s'éloigner du premier rail (30) dans un deuxième segment (56) arrière de sorte
que le deuxième rail (32) faisant face fait face au premier rail (30) à une distance telle que la plaque latérale (26) lorsqu'elle se trouve dans la position ouverte, peut être déplacée au-delà de la butée (46) en soulevant le bord (29) de la plaque latérale (26), qui se trouve à l'arrière lors de l'ouverture de la plaque latérale (26) et que néanmoins le bord (27) avant opposé de la plaque latérale (26) ne peut pas être soulevé ou peut être soulevé seulement de manière négligeable.

2. Support selon la revendication 1, **caractérisé en ce qu'**est prévu un mécanisme de fermeture, qui fixe la plaque latérale (26) dans la position fermée.

3. Support selon la revendication 2, **caractérisé en ce que** le mécanisme de fermeture repose sur une modification éventuelle mécanique.

4. Support selon la revendication 3, **caractérisé en ce que** le mécanisme de fermeture comprend au moins un segment (48, 50) s'étendant à l'oblique au niveau de l'un des rails (30, 32), en particulier au niveau du rail (30) situé en bas.

5. Support selon la revendication 4, **caractérisé en ce que** le segment (48) s'étendant à l'oblique se trouve dans la direction de fermeture (S) au niveau de l'extrémité avant du rail (30).

6. Support selon la revendication 5, **caractérisé en ce qu'**un segment s'étendant à l'oblique est prévu également au niveau de l'extrémité arrière du rail (30).

7. Support selon la revendication 5 ou la revendication 6, **caractérisé en ce que** le rail (30) comprend un point mort (52).

8. Support selon l'une quelconque des revendications précédentes, **caractérisé en ce que** le deuxième rail (32) s'étend depuis un point faisant face à la butée (46), à l'encontre de la direction de fermeture (S), de manière à s'éloigner du premier rail (30), à l'intérieur d'un arc de cercle, dont le point central est la butée ou une partie faisant saillie et dont le rayon correspond à la distance entre le point central et l'angle avant supérieur de la plaque latérale.

9. Support selon l'une quelconque des revendications précédentes, **caractérisé en ce que** le premier et/ou le deuxième rail (30, 32) sont formés par une rainure.

10. Support selon la revendication 9, **caractérisé en ce que** la butée (46) est formée par un rétrécissement de la rainure.

11. Support selon l'une quelconque des revendications précédentes, **caractérisé en ce que** les rails (30, 32) sont réalisés de manière ouverte à l'encontre de la direction de fermeture.

12. Support selon l'une quelconque des revendications précédentes, **caractérisé en ce que** la partie faisant saillie (44) est disposée dans la direction de fermeture (S) derrière l'axe de centre de gravité de la plaque latérale (26).

13. Support selon l'une quelconque des revendications précédentes, **caractérisé en ce que** la baguette de maintien (34) guidée dans le premier rail (30) présente trois points d'appui (38, 40, 42), un premier point d'appui (38) étant prévu au niveau de l'extrémité avant dans la direction de fermeture (S) de la baguette de maintien (34), un deuxième point d'appui (40) étant prévu au niveau de l'extrémité arrière dans la direction de fermeture (S) de la baguette de maintien (34) et un troisième point d'appui (42) étant prévu dans la zone de la partie faisant saillie (44), le troisième point d'appui (42) étant prévu dans la direction de fermeture (S) derrière la partie faisant saillie (44).

14. Support selon la revendication 13, **caractérisé en ce que** le premier, le deuxième et/ou le troisième point d'appui (38, 40, 42) sont formés par un galet.

15. Support selon la revendication 13, **caractérisé en ce que** le premier, lé deuxième et/ou le troisième point d'appui (38, 40, 42) sont formés par un patin coulissant.

16. Support selon l'une quelconque des revendications 13 à 15, **caractérisé en ce que** le troisième point d'appui (42) est disposé au niveau de la baguette de maintien (34) en retrait par rapport au premier et au deuxième point d'appui (38, 40) en direction du premier rail (30).

17. Support selon l'une quelconque des revendications précédentes, **caractérisé en ce qu'**une poignée (36) est prévue au niveau de l'extrémité avant de la baguette de maintien (34).

18. Ensemble modulaire pour un pare-vent (12) d'une balance (10) comprenant un support (28) selon l'une quelconque des revendications précédentes et comprenant une plaque latérale (26), qui est logée de manière à pouvoir être coulissée dans les rails (30, 32) dans une direction de fermeture (S).

19. Procédé servant au démontage d'une plaque latérale (26) d'un ensemble modulaire selon la revendication 18, comprenant les étapes suivantes consistant à :
- coulisser la plaque latérale (26) à l'encontre de la direction de fermeture (S) jusqu'à ce que la partie faisant saillie (44) associée à la plaque latérale (26) repose au niveau de la butée (46) du premier rail (30) ;
- soulever le bord (29) arrière dans la direction de fermeture (S) de la plaque latérale (26) jusqu'à ce que la partie faisant saillie (44) ne repose plus au niveau de la butée (46), la plaque latérale (26) étant pivotée autour d'un point d'appui (38) avant ;
- coulisser la plaque latérale (26) à l'encontre de la direction de fermeture (S) jusqu'à ce que cette dernière sorte par glissement du support (28).
